# FASCICULE DE BREVET EUROPEEN

(11) **EP 4 100 268 B1**
(45) Date de publication et mention de la délivrance du brevet: **23.07.2025**
(21) Numéro de dépôt: 21700439.9
(22) Date de dépôt: 14.01.2021
(51) Int. Cl.: B60H 1/00, B60H 1/03, B60H 1/22, H01M 10/625, H01M 8/04007, H01M 10/6569, H01M 10/663, H01M 10/667

(54) **DISPOSITIF DE RECUPERATION ET DE REGULATION D'ENERGIE THERMIQUE D'UN VEHICULE ELECTRIQUE A GENERATEUR ELECTROCHIMIQUE AVEC UN SYSTEME HVAC**
VORRICHTUNG ZUR RÜCKGEWINNUNG UND REGULIERUNG VON WÄRMEENERGIE EINES ELEKTROFAHRZEUGS MIT ELEKTROCHEMISCHEM GENERATOR UND HLKK-SYSTEM
DEVICE FOR RECOVERING AND REGULATING THERMAL ENERGY OF AN ELECTRIC VEHICLE WITH ELECTROCHEMICAL GENERATOR WITH AN HVAC SYSTEM

(30) Priorité: 06.02.2020 EP 20155848
(43) Date de publication de la demande: 14.12.2022
(73) Titulaire: The Swatch Group Research and Development Ltd, 2074 Marin (CH)
(72) Inventeur: GASHI, Rexhep, 1645 Le Bry (CH)
(74) Mandataire: ICB SA
(86) Numéro de dépôt international: PCT/EP2021/050703
(87) Numéro de publication internationale: WO 2021/156034

(56) Documents cités:
- WO-A1-2019/062870
- WO-A2-2007/064381
- CH-B1- 711 726
- DE-A1- 102011 016 070
- US-A1- 2014 326 010
- US-A1- 2018 281 617
- US-A1- 2019 168 569

## Description

### Domaine de l'invention

L'invention se rapporte à un dispositif de récupération et de régulation d'énergie thermique d'un véhicule électrique à générateur électrochimique, tel que batterie, pile à combustible ou hybride, avec un système HVAC. Le dispositif de récupération et de régulation d'énergie thermique comprend un circuit de climatisation d'un système HVAC de l'habitacle du véhicule (heating-ventilation-airconditioning-cooling ou chauffage, ventilation et climatisation), dans lequel circule un fluide, ledit circuit de climatisation comprenant au moins un condenseur/évaporateur externe, un compresseur, un condenseur interne destiné à chauffer l'habitacle, un premier orifice de détente prévu en aval du condenseur interne, entre le condenseur interne et le condenseur/évaporateur externe, un évaporateur interne destiné à refroidir l'habitacle, un second orifice de détente prévu en amont de l'évaporateur interne, entre le condenseur/évaporateur externe et l'évaporateur interne.

### Arrière-plan de l'invention

De tels dispositifs sont connus de l'homme du métier, et sont notamment utilisés dans les véhicules électriques ou hybrides pour remplacer les systèmes de chauffage électrique à résistance très consommateurs d'électricité. Les systèmes HVAC ont également l'avantage de se transformer en climatisation l'été. Les systèmes HVAC sont les plus efficaces pour réguler la température de l'habitacle du véhicule en optimisant la consommation en énergie électrique du véhicule. Ils permettent ainsi d'augmenter son autonomie.

Toujours dans un souci d'augmenter l'autonomie d'un véhicule électrique ou hybride, on recherche également à optimiser le rendement énergétique du générateur électrochimique en régulant sa température. En effet, la température a une forte influence sur le fonctionnement du générateur électrochimique : le générateur électrochimique doit être refroidi quand sa température est trop haute, ou réchauffé quand sa température est trop basse. En particulier, en hiver, une température trop basse du générateur électrochimique entraîne une baisse de rendement très importante de sorte que l'autonomie du véhicule peut être diminuée de moitié. De plus, lorsque le générateur électrochimique est une batterie, les courbes de l'état de charge en fonction du temps de charge de la batterie indiquent que le temps de charge augmente avec la température. En outre, en raison de la montée en température lors de la charge, le temps de charge est relativement rapide pour atteindre 80% de la charge mais est ensuite très long pour atteindre 100% de la charge.

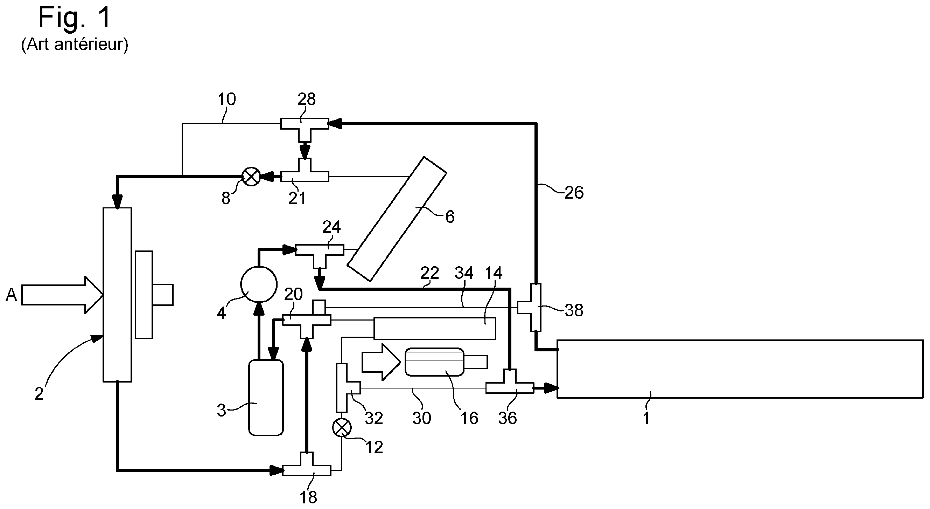

A ce titre, le brevet CH 711 726 B1 décrit un dispositif de régulation de la température d'un générateur électrochimique, tel que batterie ou pile à combustible ou hybride, d'un véhicule électrique comme représenté sur les figures 1 à 5, et comme expliqué en détail ci-après comme art antérieur.

En référence par exemple à la figure 1, le dispositif de régulation de la température d'un générateur électrochimique d'un véhicule électrique ou hybride, comprend un circuit de climatisation d'un système HVAC de l'habitacle du véhicule. Cette figure 1 représente un mode de chauffage par exemple de la batterie en charge avec le véhicule à l'arrêt.

Plus particulièrement, le circuit de climatisation comprend, dans une première boucle, dans le sens de circulation d'un fluide, un condenseur/évaporateur externe 2, généralement situé à l'avant du véhicule, un accumulateur 3, un compresseur 4, de préférence à haute vitesse, un condenseur interne 6 destiné à chauffer l'habitacle, un premier orifice de détente 8 prévu en aval du condenseur interne, entre le condenseur interne 6 et le condenseur/évaporateur externe 2. Une dérivation 10 est prévue entre le condenseur interne 6 et le condenseur/évaporateur externe 2, au niveau du premier orifice de détente 8. Une deuxième boucle comprend un second orifice de détente 12 prévu en amont d'un évaporateur interne 14, entre le condenseur/évaporateur externe 2 et l'évaporateur interne 14, et qui est destiné à refroidir l'habitacle. Au niveau de l'évaporateur interne 14 est prévu un ventilateur 16 du bloc climatisation. Les différents éléments sont reliés entre eux par des conduites dans lesquelles circule un fluide réfrigérant, tel qu'un gaz réfrigérant. La circulation dans la première boucle ou dans la deuxième boucle et la dérivation est gérée au moyen d'un ensemble de vannes 18, 20, 21, 28, 32, 36, 38. Les vannes 18 et 20 sont prévues à l'intersection de la première boucle et de la deuxième boucle, et la vanne 21 est prévue à l'intersection de la première boucle et de la dérivation 10, en amont du premier orifice de détente 8. Ces vannes sont par exemple des électrovannes à au moins 3 voies excepté par exemple pour la vanne 20 à au moins 4 voies.

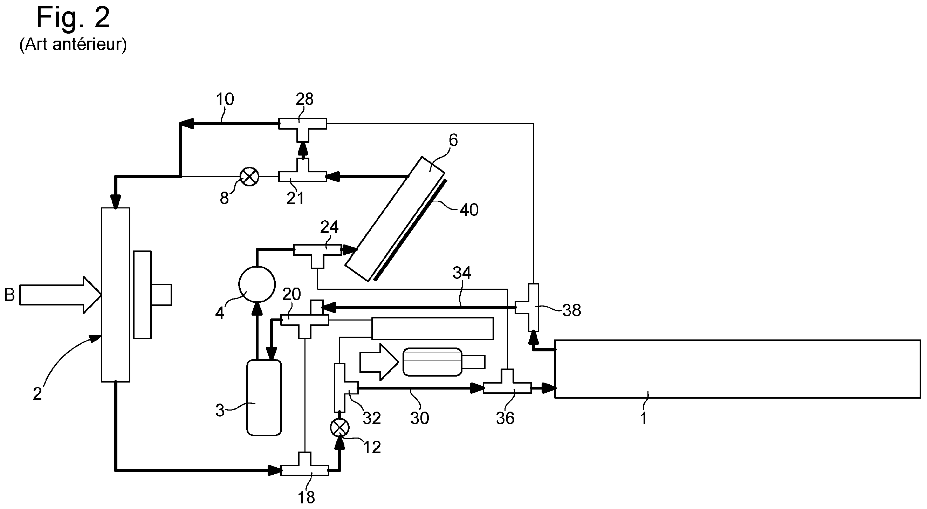

Il est à noter que la circulation du fluide gazeux dans les conduites dans cette forme d'exécution est représentée à la figure 1 par des traits plus foncés pour ce mode chauffage de la batterie en charge avec le véhicule à l'arrêt. Il en est de même pour les figures 2 à 5 suivantes.

Le dispositif de régulation comprend en outre un premier circuit de chauffage du générateur électrochimique 1 dans lequel est susceptible de circuler le même fluide que dans le circuit de climatisation. Le premier circuit de chauffage du générateur électrochimique comprend, dans le sens de circulation du fluide, une première conduite d'amenée du fluide 22 à un élément caloporteur associé au générateur électrochimique 1. La première conduite d'amenée 22 est reliée à une première sortie prévue entre le compresseur 4 et le condenseur interne 6 au moyen d'une vanne à 3 voies 24, et une première conduite d'évacuation du fluide 26 de l'élément caloporteur. La première conduite d'évacuation 26 est reliée à une première entrée prévue entre le condenseur interne 6 et le premier orifice de détente 8 au moyen d'une vanne à 3 voies 28.

Le dispositif de régulation comprend en outre un second circuit de refroidissement du générateur électrochimique 1 dans lequel est susceptible de circuler le même fluide que dans le circuit de climatisation. Le second circuit de refroidissement du générateur électrochimique 1 comprend, dans le sens de circulation du fluide, une seconde conduite d'amenée du fluide 30 à un élément caloporteur associé au générateur électrochimique 1. La seconde conduite d'amenée 30 est reliée à une seconde sortie prévue entre le second orifice de détente 12 et l'évaporateur interne 14 au moyen d'une vanne à 3 voies 32, et une seconde conduite d'évacuation du fluide 34 de l'élément caloporteur. La seconde conduite d'évacuation 34 est reliée à une seconde entrée prévue en aval de l'évaporateur interne 14, entre l'évaporateur interne 14 et le compresseur 4, au moyen de la vanne 20 qui est constituée d'une vanne à 4 voies.

Il est à noter que l'on doit comprendre pour cette description, que le circuit de climatisation comprend le premier circuit de chauffage et le second circuit de refroidissement, même si généralement pour la climatisation, cela concerne principalement le passage du gaz par le second orifice de détente 12 (détendeur). Le premier circuit de chauffage et le second circuit de refroidissement sont imbriqués l'un dans l'autre et dépendent de la commande des différentes vannes par les moyens de commande pour remplir leur fonction.

La première conduite d'amenée 22 et la seconde conduite d'amenée 30 du fluide à l'élément caloporteur du générateur électrochimique 1 sont connectées audit élément caloporteur par une seule vanne à 3 voies 36. De même, la première conduite d'évacuation 26 et la seconde conduite d'évacuation 34 du fluide de l'élément caloporteur sont connectées audit élément caloporteur par une seule vanne à 3 voies 38. Il est également possible de prévoir des connections séparées et indépendantes à l'élément caloporteur. Il est aussi possible de prévoir un échangeur entre les vannes 36, 38 et le générateur électrochimique 1 afin de favoriser les échanges thermiques.

Les vannes 24, 28, 32 et 20 constituent les vannes agencées pour pouvoir mettre en communication le circuit de climatisation avec l'un ou l'autre du premier circuit de chauffage et du second circuit de refroidissement du générateur électrochimique 1.

Le dispositif de régulation comprend des moyens de commande des vannes 24, 28, 32, 20, 36 et 38 agencés pour autoriser, en fonction de la température du générateur électrochimique 1, la circulation du fluide du circuit de climatisation dans le premier circuit de chauffage pour chauffer le générateur électrochimique 1 et/ou la circulation du fluide du circuit de climatisation dans le second circuit de refroidissement pour refroidir le générateur électrochimique 1, afin de réguler sa température.

D'autres moyens de commande des vannes du circuit de climatisation sont prévus pour le fonctionnement desdites vannes 18, 20 et 21 pour la régulation de la température de l'habitacle, en plus de la régulation de la température du générateur électrochimique.

Les moyens de commande sont associés à des capteurs de température du générateur électrochimique 1 afin d'actionner les vannes en fonction de l'effet recherché selon que le véhicule est en arrêt ou en marche, et selon la présence d'une batterie ou d'une pile à combustible. Selon les figures 1 à 5, la circulation du fluide gazeux dans les conduites dans les formes d'exécution est représentée par des traits plus foncés. La figure 1 représente le mode chauffage de la batterie 1 en charge avec le véhicule à l'arrêt. La figure 2 représente un mode refroidissement de la batterie 1 en charge avec le véhicule à l'arrêt. La figure 3 représente un mode chauffage de l'habitacle et chauffage de la batterie 1 le véhicule étant en marche. La figure 4 représente un mode climatisation de l'habitacle et refroidissement de la batterie 1, le véhicule étant en marche. Finalement, la figure 5 représente un mode chauffage de l'habitacle et refroidissement de la batterie 1, le véhicule étant en marche.

Plus particulièrement, quand le véhicule est à l'arrêt, les moyens de commande des vannes, le compresseur 4, ainsi que tous les composants électroniques sont agencés pour fonctionner sur le secteur, le véhicule étant branché au secteur, ou non.

Les moyens de commande des vannes peuvent être agencés pour rendre inopérants le condenseur interne 6 et l'évaporateur interne 14 vis-à-vis de la régulation de la température de l'habitacle, quand le véhicule est à l'arrêt, de sorte que seuls les modes chauffage ou refroidissement de la batterie sont opérationnels.

Lorsque la température extérieure est froide, il est nécessaire de chauffer la batterie ou la pile à combustible pour faciliter le démarrage du véhicule, ainsi que de chauffer la batterie pour améliorer l'efficacité de sa charge. Dans ce cas du mode chauffage du générateur électrochimique 1, le véhicule étant à l'arrêt, et dans le cas de la batterie, ladite batterie pouvant être en charge, selon la figure 1, les moyens de commande des vannes sont agencés pour que le fluide, qui traverse le condenseur/évaporateur externe 2, au contact de l'air froid A, circule vers l'accumulateur 3 via les vannes 18 et 20, puis dans le compresseur 4, où il est comprimé, et donc chauffé, puis envoyé, via la vanne 24, dans la première conduite d'amenée 22 du circuit de chauffage du générateur électrochimique jusqu'à l'élément caloporteur du générateur électrochimique 1 via la vanne 36. Lors de son passage, le fluide réchauffe l'élément caloporteur, qui chauffe le générateur électrochimique 1. Puis le fluide circule dans la première conduite d'évacuation 26 du circuit de chauffage du générateur électrochimique 1 via la vanne 38, rejoint le circuit de climatisation via les vannes 28, 21 et regagne le condenseur/évaporateur externe 2 en passant par le premier orifice de détente 8. Dans ce mode, le condenseur interne 6 et l'évaporateur 14 ne sont pas actifs.

Si au moment du démarrage, le générateur électrochimique est trop chaud, ou si au moment de la charge, la batterie est trop chaude, en raison d'un air extérieur trop chaud de sorte que le générateur électrochimique doit être refroidi, alors les moyens de commande des vannes sont agencés pour passer dans le mode refroidissement du générateur électrochimique, le véhicule étant à l'arrêt. Dans le cas de la batterie, ladite batterie peut être en charge, selon la figure 2. Les moyens de commande des vannes sont alors agencés pour que le fluide qui traverse le condenseur/évaporateur externe 2, au contact de l'air chaud B, circule vers la seconde conduite d'amenée 30 du circuit de refroidissement du générateur électrochimique via la vanne 18, le second orifice de détente 12 où il est refroidi, et la vanne 32, jusqu'à l'élément caloporteur de la batterie 1 via la vanne 36. Lors de son passage, le fluide refroidit l'élément caloporteur qui refroidit le générateur électrochimique 1. Puis le fluide circule dans la seconde conduite d'évacuation 34 du circuit de refroidissement via la vanne 38, rejoint le circuit de climatisation via la vanne 20, pour traverser l'accumulateur 3, le compresseur 4 où il est comprimé, le condenseur interne 6 via la vanne 24, ledit condenseur interne étant rendu inopérant vis-à-vis de la régulation de l'habitacle au moyen d'un obturateur 40. Puis le fluide circule dans la dérivation 10 via les vannes 21 et 28 puis regagne le condenseur/évaporateur externe 2, sans passer par le premier orifice de détente 8. Dans ce mode, le condenseur interne 6 et l'évaporateur 14 ne sont pas actifs vis-à-vis de la régulation de la température de l'habitacle.

Lorsque le générateur électrochimique est une batterie, les moyens de commande des vannes sont agencés pour autoriser la circulation du fluide dans le premier circuit de chauffage pour chauffer la batterie jusqu'à atteindre une température optimale de charge et pour autoriser la circulation du fluide du circuit de climatisation dans le second circuit de refroidissement pour refroidir la batterie pour retrouver la température optimale de charge, afin de charger la batterie dans un temps le plus court possible. Dans ce cas, les moyens de commande des vannes sont agencés pour passer du mode de chauffage de la batterie, le véhicule étant à l'arrêt et la batterie en charge, selon la figure 1, au mode de refroidissement de la batterie, le véhicule étant à l'arrêt et la batterie en charge, selon la figure 2 et inversement, automatiquement, en fonction de la température optimale de la batterie à maintenir pour charger la batterie dans un temps le plus court possible. La température optimale de charge de la batterie peut être entre 5 et 25°C.

Dans les différents cas de figures décrits ci-dessus, la gestion des moyens de commande des vannes est faite automatiquement, sans intervention humaine. Ceci est utilisé notamment pour maintenir la température de la batterie à une température idéale de charge.

Lorsque le véhicule est à l'arrêt, il est possible d'utiliser l'énergie thermique fournie par le générateur électrochimique 1 pour réguler la température de l'habitacle. Il est ainsi possible de programmer le temps de charge de la batterie pour la chauffer suffisamment et profiter de la chaleur dégagée par la batterie pendant sa charge afin de chauffer l'habitacle ou pour la refroidir suffisamment et profiter du froid dégagé par la batterie pendant sa charge afin de refroidir l'habitacle. Dans ce cas, les moyens de commande des vannes sont agencés pour autoriser le fonctionnement du condenseur interne 6 et de l'évaporateur interne 14 quand le véhicule est à l'arrêt et réguler la température de l'habitacle en plus de la température du générateur électrochimique 1. Ainsi, la température de l'habitacle est confortable lorsque l'utilisateur prend place dans le véhicule pour le démarrer.

Lorsque le véhicule est en marche, les moyens de commande des vannes ainsi que le compresseur 4 sont agencés pour fonctionner sur générateur électrochimique.

Selon une autre variante, les moyens de commande des vannes sont agencés pour autoriser le fonctionnement du condenseur interne 6 et de l'évaporateur interne 14 quand le véhicule est en marche et réguler la température de l'habitacle en plus de la température du générateur électrochimique.

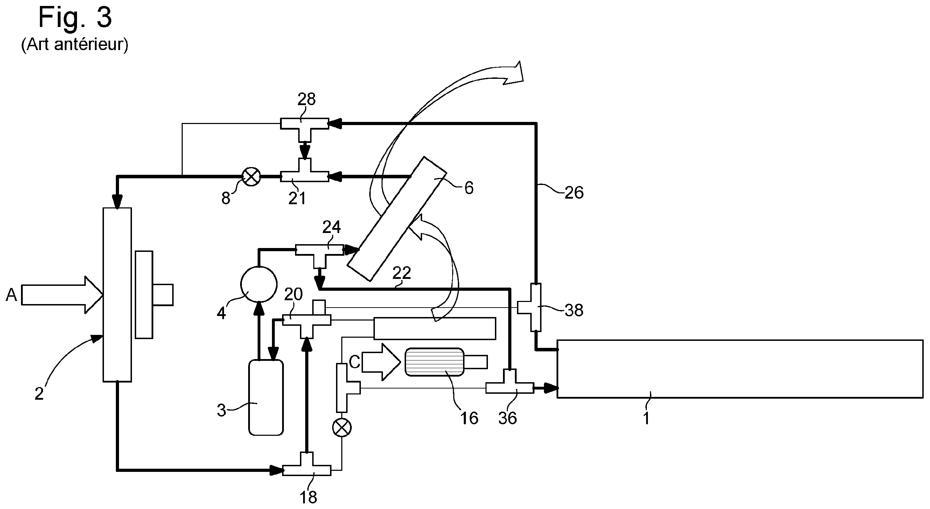

Plus spécifiquement, lorsque la température extérieure est froide, les moyens de commande des vannes sont agencés pour passer le système HVAC en mode chauffage de l'habitacle et pour autoriser la circulation du fluide du circuit de climatisation dans le premier circuit de chauffage du générateur électrochimique pour chauffer l'habitacle et le générateur électrochimique lorsque le véhicule est en marche, comme cela est montré par la figure 3. Dans ce cas du mode de chauffage de l'habitacle et du générateur électrochimique, les moyens de commande des vannes sont agencés pour que le fluide, qui traverse le condensateur/évaporateur 2, au contact de l'air froid A, circule vers l'accumulateur 3 via les vannes 18 et 20, puis dans le compresseur 4 où il est comprimé, et donc chauffé, puis envoyé, via la vanne 24, d'une part dans la première conduite d'amenée 22 du circuit de chauffage du générateur électrochimique jusqu'à l'élément caloporteur du générateur électrochimique 1 via la vanne 36, et d'autre part dans le condenseur interne 6. Le ventilateur du bloc climatisation 16 est agencé pour être ouvert de sorte que l'air froid entrant en C est chauffé en traversant le condenseur interne 6 avant d'être envoyé dans l'habitacle pour le chauffer. Puis le fluide repart en direction du condenseur/évaporateur externe 2 en passant par le premier orifice de détente 8. Du côté du circuit de chauffage du générateur électrochimique, le fluide réchauffe l'élément caloporteur qui chauffe le générateur électrochimique 1. Puis le fluide circule dans la première conduite d'évacuation 26 du circuit de chauffage du générateur électrochimique via la vanne 38, rejoint le circuit de climatisation via les vannes 28 et 21 et regagne le condenseur/évaporateur externe 2 en passant par le premier orifice de détente 8. Dans ce mode, le condenseur interne 6 est actif vis-à-vis de la régulation de la température de l'habitacle. Dans ce mode, le dispositif de régulation permet de produire de la chaleur pour chauffer l'habitacle d'une part et chauffer le générateur électrochimique d'autre part afin de le maintenir à une température optimale pour assurer une meilleure efficacité.

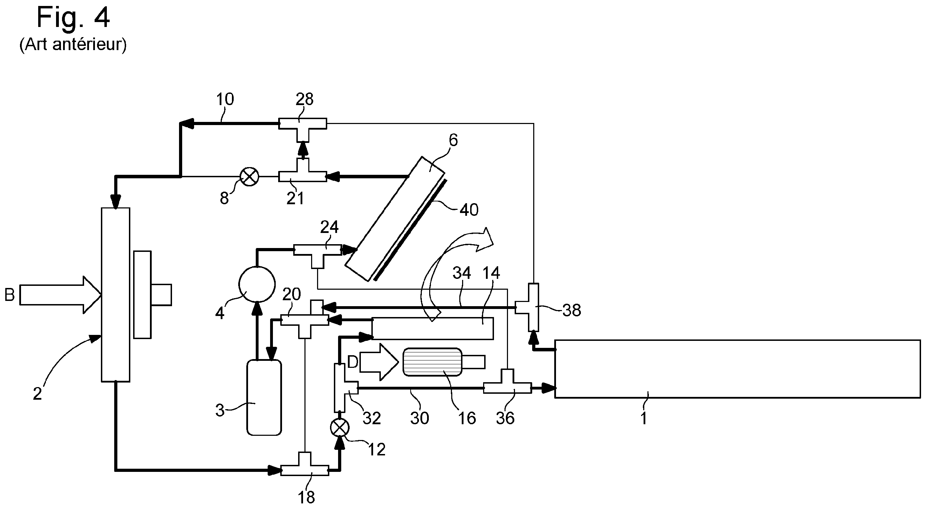

Si le générateur électrochimique devient trop chaud, lorsque le véhicule est en marche, en raison par exemple d'une charge de puissance de traction très importante, où l'air extérieur est trop chaud, de sorte que le générateur électrochimique doit être refroidi, alors les moyens de commande des vannes sont agencés pour passer le système HVAC en mode climatisation de l'habitacle. De plus, cela permet d'autoriser la circulation du fluide du circuit de climatisation dans le second circuit de refroidissement du générateur électrochimique pour refroidir l'habitacle et le générateur électrochimique, conformément à la figure 4. Les moyens de commande des vannes sont alors agencés pour que le fluide qui traverse le condenseur/évaporateur externe 2, au contact de l'air chaud B, soit orienté, via la vanne 18, vers le second orifice de détente 12 où il est refroidi, puis vers la vanne 32 où le fluide est divisé d'une part vers la seconde conduite d'amenée 30 du circuit de refroidissement du générateur électrochimique jusqu'à l'élément caloporteur du générateur électrochimique 1 via la vanne 36 et d'autre part vers l'évaporateur interne 14. Le ventilateur du bloc climatisation 16 est agencé pour être ouvert de sorte que l'air chaud entrant en D est refroidi en traversant l'évaporateur interne 14 avant d'être envoyé dans l'habitacle pour le refroidir. Puis le fluide repart dans le circuit de climatisation via la vanne 20. Du côté du circuit de refroidissement du générateur électrochimique 1, le fluide, après avoir refroidi le générateur électrochimique 1, circule dans la seconde conduite d'évacuation 34 du circuit de refroidissement via la vanne 38, rejoint le circuit de climatisation via la vanne 20, pour traverser, avec le fluide issu de l'évaporateur interne 14, l'accumulateur 3, le compresseur 4 où il est comprimé, le condenseur interne 6 via la vanne 24, ledit condenseur interne étant rendu inopérant vis-à-vis de la régulation de l'habitacle au moyen de l'obturateur 40. Puis le fluide circule dans la dérivation 10 via les vannes 21 et 28 puis regagne le condenseur/évaporateur externe 2, sans passer par le premier orifice de détente 8. Dans ce mode, le dispositif de régulation permet de produire du froid pour refroidir l'habitacle d'une part et refroidir le générateur électrochimique d'autre part afin de le maintenir à une température optimale pour assurer une meilleure efficacité.

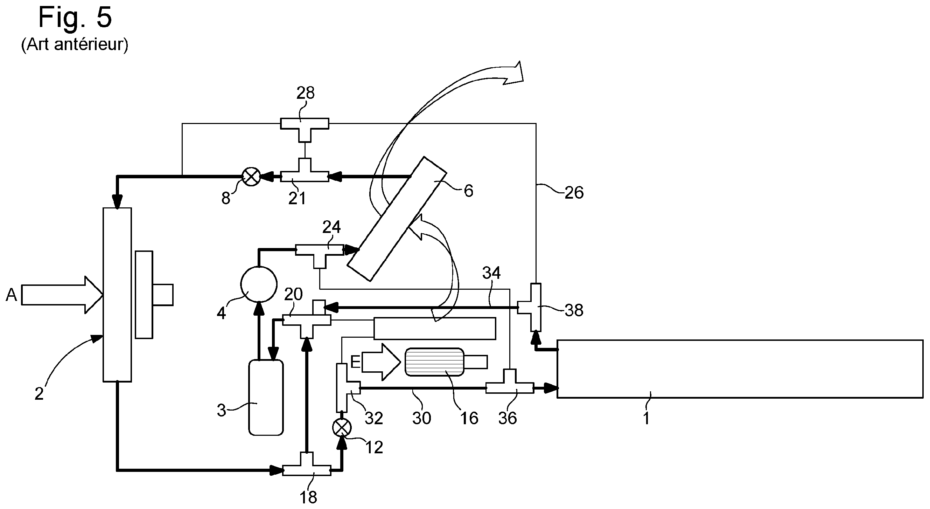

Si le générateur électrochimique devient trop chaud lorsque le véhicule est en marche, en raison par exemple d'un fonctionnement intensif, de sorte que le générateur électrochimique doit être refroidi mais que l'air extérieur est froid et que l'habitacle doit être chauffé, alors les moyens de commande des vannes sont agencés pour passer le système HVAC en mode chauffage de l'habitacle et pour autoriser la circulation du fluide du circuit de climatisation dans le second circuit de refroidissement du générateur électrochimique pour chauffer l'habitacle et refroidir le générateur électrochimique, conformément à la figure 5. Les moyens de commande des vannes sont alors agencés pour que le fluide, qui traverse le condenseur/évaporateur 2, au contact de l'air froid A, soit orienté via la vanne 18, d'une part directement vers la vanne 20 et d'autre part vers le second orifice de détente 12 où il est refroidi puis, via la vanne 32, dans la seconde conduite d'amenée 30 du circuit de refroidissement du générateur électrochimique jusqu'à l'élément caloporteur du générateur électrochimique 1 via la vanne 36. Le fluide, après avoir refroidi le générateur électrochimique 1, circule dans la seconde conduite d'évacuation 34 du circuit de refroidissement via la vanne 38, et rejoint le circuit de climatisation via la vanne 20 pour traverser, avec le fluide venant directement de la vanne 18, l'accumulateur 3, le compresseur 4 où il est comprimé, et le condenseur interne 6 via la vanne 24. Le ventilateur du bloc climatisation 16 est agencé pour être ouvert de sorte que l'air froid entrant en E est chauffé en traversant le condenseur interne 6 avant d'être envoyé dans l'habitacle pour le chauffer. Puis le fluide traverse le premier orifice de détente 8 via la vanne 21 et regagne le condenseur/évaporateur externe 2. Dans ce mode, le dispositif de régulation permet de produire du chaud pour chauffer l'habitacle d'une part et de produire du froid pour refroidir le générateur électrochimique d'autre part afin de le maintenir à une température optimale pour assurer une meilleure efficacité, la chaleur produite par le générateur électrochimique étant utilisée pour chauffer l'habitacle.

Dans ces trois modes de régulation de la température où la voiture est en marche, la gestion des moyens de commande des vannes est faite de manière semi-automatique, l'utilisateur intervenant pour passer le système HVAC en mode chauffage ou en mode climatisation de l'habitacle pour régler la température de l'habitacle, la gestion de la température du générateur électrochimique étant réalisée de manière automatique au moyen des capteurs de température.

Le brevet US 10,168,079 B2 décrit un dispositif à cycles de réfrigération, notamment de la batterie. Cependant, il n'est pas prévu de récupérer de l'énergie thermique d'un élément du véhicule pour chauffer ou refroidir par exemple la batterie ou pour l'habitacle du véhicule. De plus, il n'est utilisé dans le circuit de climatisation qu'un échangeur à gaz-air très approximatif et sans possibilité de réguler la température de la batterie précisément.

### Résumé de l'invention

L'invention a notamment pour objectif de pallier les différents inconvénients des générateurs électrochimiques équipant les véhicules électriques ou hybrides connus et de prévoir de relier dans le circuit de chauffage ou le circuit de refroidissement également au moins un moteur électrique du véhicule et au moins un circuit électronique de commande et un générateur électrochimique pour la récupération et la régulation de l'énergie thermique pour optimiser le rendement global d'un tel véhicule et transformer les pertes thermiques en énergie positive pour la régulation de température dans l'habitacle.

Plus précisément, un objectif de l'invention est de fournir un dispositif de récupération et de régulation d'énergie thermique d'un véhicule électrique à générateur électrochimique, tel que batterie ou pile à combustible ou hybride, avec un système HVAC permettant notamment la récupération de l'énergie thermique pour le générateur électrochimique afin d'optimiser son rendement énergétique. La récupération de l'énergie thermique de chauffage ou de refroidissement est aussi prévue pour au moins le moteur électrique et au moins le circuit électronique de commande en liaison avec le générateur électrochimique, voire aussi avec l'énergie de freinage, afin d'augmenter l'autonomie du véhicule.

Un autre objectif de l'invention, lorsque le générateur électrochimique est une batterie, est de fournir un dispositif de récupération d'énergie thermique lors de la charge de la batterie afin d'optimiser le temps de charge et le rendre le plus court possible.

A cet effet, la présente invention concerne un dispositif de récupération et de régulation d'énergie thermique d'un véhicule électrique à générateur électrochimique, qui comprend les caractéristiques de la revendication indépendante 1.

Des formes d'exécution particulières du dispositif de récupération et de régulation d'énergie thermique sont définies dans les revendications dépendantes 2 à 6.

Ainsi, le dispositif de récupération et de régulation d'énergie thermique de l'invention permet d'optimiser le rendement énergétique du générateur électrochimique, et en liaison avec le moteur électrique de traction et le circuit électronique de pilotage afin d'augmenter l'autonomie du véhicule. De plus, lorsque le générateur électrochimique est une batterie, le dispositif de récupération et de régulation d'énergie thermique de l'invention permet d'optimiser le temps de charge de la batterie en le rendant le plus court possible.

Un avantage dispositif de récupération de régulation d'énergie thermique réside dans le fait que le moteur de traction électronique de pilotage est lié au circuit de chauffage ou au circuit de refroidissement avec la batterie, ce qui permet d'éviter toute perte d'énergie thermique et garantir que le véhicule ait une augmentation de son autonomie avant une autre charge de la batterie.

### Description sommaire des dessins

D'autres caractéristiques et avantages de l'invention apparaîtront plus clairement à la lecture de la description suivante de différents modes de réalisation de l'invention, donnés à titre de simples exemples illustratifs et non limitatifs, et des figures annexées, parmi lesquelles :
la figure 1 représente une vue schématisée d'un dispositif de régulation de la température d'un générateur électrochimique d'un véhicule électrique, le véhicule étant à l'arrêt et la batterie en charge de l'art antérieur,
la figure 2 représente une vue schématisée d'un dispositif de régulation de la température d'un générateur électrochimique d'un véhicule électrique, le véhicule étant à l'arrêt et la batterie en charge de l'art antérieur,
la figure 3 représente une vue schématisée d'un dispositif de régulation de la température d'un générateur électrochimique d'un véhicule électrique, le véhicule étant en marche de l'art antérieur,
la figure 4 représente une vue schématisée d'un dispositif de régulation de la température d'un générateur électrochimique d'un véhicule électrique, le véhicule étant en marche de l'art antérieur,
la figure 5 représente une vue schématisée d'un dispositif de régulation de la température d'un générateur électrochimique d'un véhicule électrique, le véhicule étant en marche de l'art antérieur,

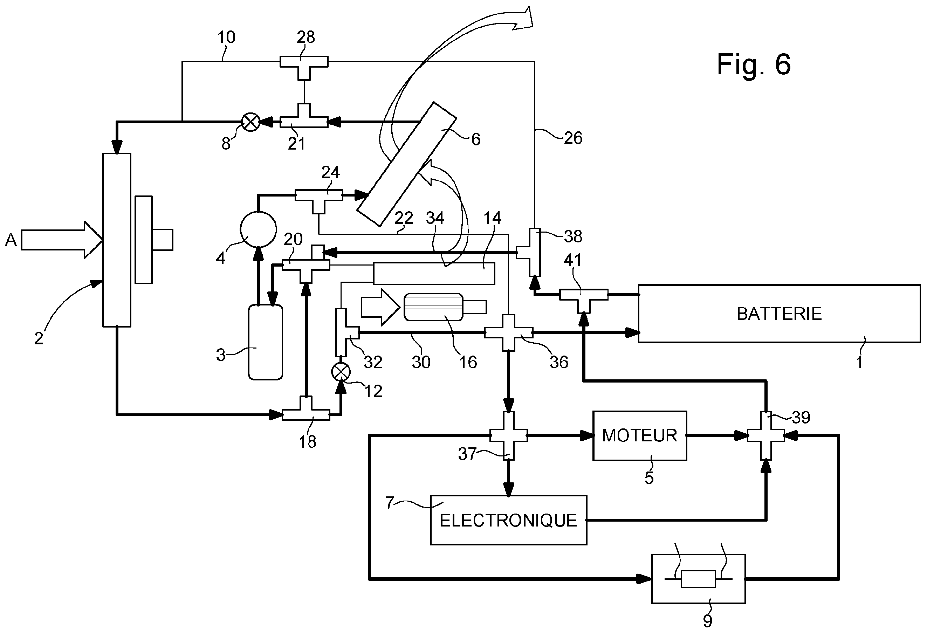

la figure 6 représente une vue schématisée d'une première forme d'exécution du dispositif de récupération et de régulation d'énergie thermique d'un véhicule électrique à générateur électrochimique selon l'invention,

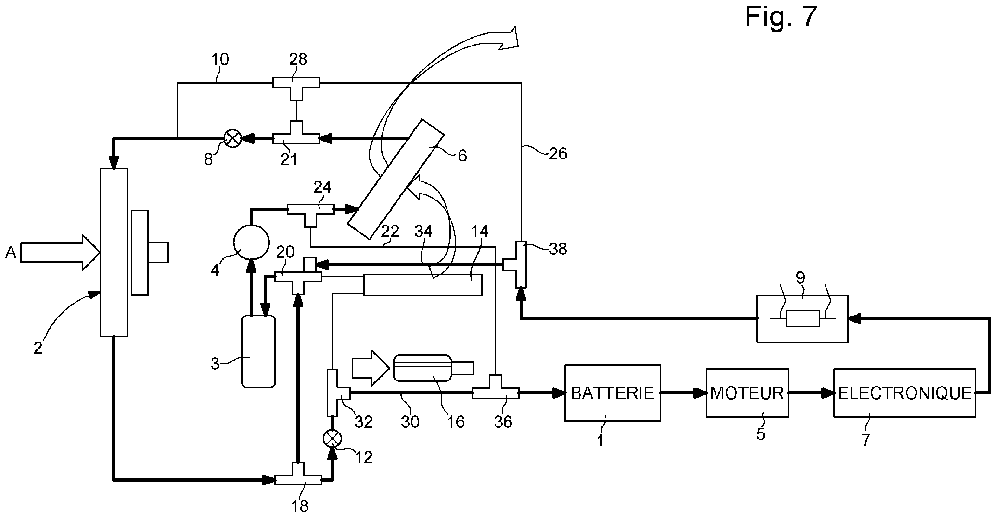

la figure 7 représente une vue schématisée d'une seconde forme d'exécution du dispositif de récupération et de régulation d'énergie thermique d'un véhicule électrique à générateur électrochimique qui ne fait pas partie de l'invention,

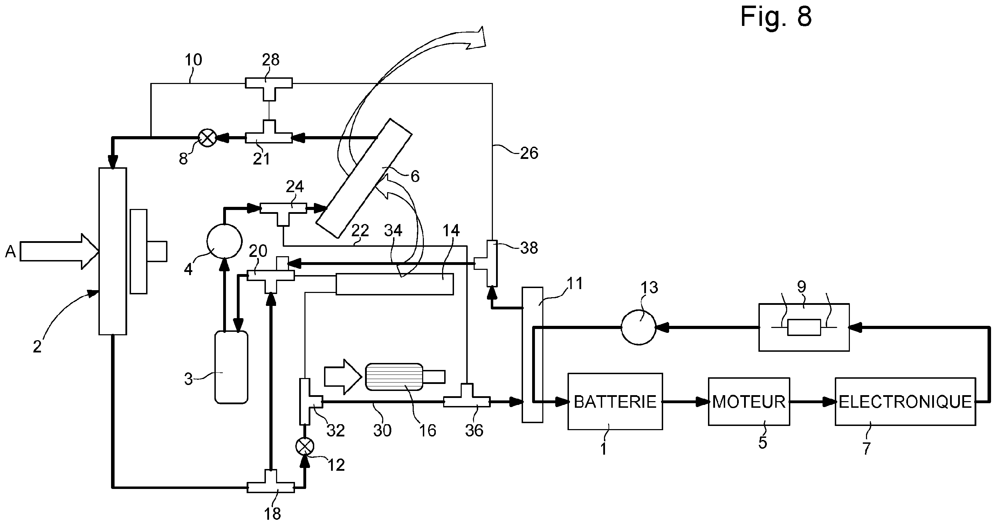

la figure 8 représente une vue schématisée d'une troisième forme d'exécution du dispositif de récupération et de régulation d'énergie thermique d'un véhicule électrique à générateur électrochimique qui ne fait pas partie de l'invention, et

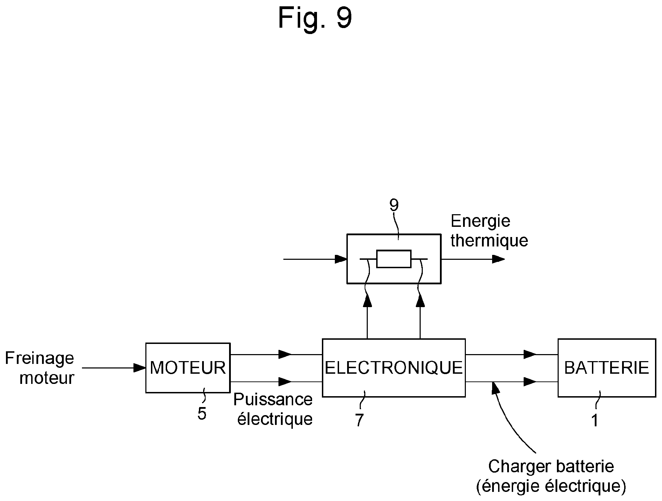

la figure 9 représente un agencement du moteur électrique, de l'électronique, du générateur électrochimique et d'un circuit de freinage pour la récupération d'énergie thermique du circuit de freinage et la charge directe du générateur électrochimique par le moteur.

### Description détaillée des modes de réalisation préférés

Dans la présente description, le terme « générateur électrochimique » désigne les batteries et les piles à combustible utilisées dans les véhicules électriques ou hybrides, indiqué dans les figures par la référence 1 indifféremment pour une batterie ou une pile à combustible. De plus, il est défini plutôt un dispositif de récupération et de régulation d'énergie thermique qu'un dispositif de régulation de température d'un générateur électrochimique comme décrit en référence aux figures 1 à 5 de l'état de l'art.

Le dispositif de récupération et de régulation de l'énergie thermique du véhicule à générateur électrochimique de la présente invention comprend un circuit de climatisation à l'identique de ce qui a été décrit en référence aux figures précédentes 1 à 5 dans l'art antérieur. Il ne sera de ce fait pas répéter intégralement tous les composants dudit dispositif et les différents modes de fonctionnement illustrés par les figures précédentes 1 à 5. Tout ce qui se rapporte au fonctionnement des différents éléments du dispositif au niveau du circuit de climatisation est identique et ne sera pas répété. Uniquement les nouveaux composants liés au circuit de chauffage ou au circuit de refroidissement du dispositif du circuit de climatisation seront décrits en détail et leur capacité à récupérer l'énergie pour la fournir à un autre composant du dispositif. L'importance de cette invention est de pouvoir utiliser l'énergie thermique de chauffage ou de refroidissement de certains composants en fonctionnement et liés au circuit de chauffage ou au circuit de refroidissement pour chauffer ou refroidir par exemple l'habitacle du véhicule électrique sans perte notable d'énergie thermique.

La figure 6 représente une première forme d'exécution du nouveau dispositif de récupération et de régulation d'énergie thermique du véhicule à générateur électrochimique 1, qui comprend un circuit de climatisation d'un système HVAC de l'habitacle du véhicule. Il est présenté par exemple selon cette première forme d'exécution vue à la figure 6 et de principe équivalent à la figure 5, un mode de chauffage habitacle et de refroidissement du générateur électrochimique 1, avec au moins un moteur électrique 5 et au moins un circuit électronique 7 ou une électronique. Cependant tous les composants de la figure 6 sont décrits avec le nouvel agencement d'au moins le moteur électrique 5 et d'au moins le circuit électronique 7 en liaison avec le générateur électrochimique 1. Le ou les moteurs électriques 5 sont pour la traction du véhicule, alors que le circuit électronique 7 peut servir de pilotage du ou des moteurs électriques 5.

Comme décrit en référence aux figures 1 à 5, ledit circuit de climatisation comprend donc un circuit de climatisation d'un système HVAC de l'habitacle du véhicule, dans lequel circule un fluide. Le fluide par exemple réfrigérant, tel qu'un gaz réfrigérant, circule notamment dans différentes conduites. Ce circuit de climatisation comprend au moins un condenseur/évaporateur externe 2, généralement situé à l'avant du véhicule, un compresseur 4, de préférence à haute vitesse, un condenseur interne 6 pour chauffer l'habitacle, un premier orifice de détente 8 prévu en aval du condenseur interne 6 entre le condenseur interne 6 et le condenseur/évaporateur externe 2, un évaporateur interne 14 pour refroidir l'habitacle, un second orifice de détente 12 prévu en amont de l'évaporateur interne 14, entre le condenseur/évaporateur externe 2 et l'évaporateur interne 14.

Le dispositif de récupération et de régulation d'énergie thermique comprend encore un premier circuit de chauffage ou de récupération d'énergie thermique de chauffage notamment du générateur électrochimique 1 et un second circuit de refroidissement ou de récupération d'énergie thermique de refroidissement notamment du générateur électrochimique 1 dans lesquels circule ledit fluide. Selon la présente invention dans cette première forme d'exécution de la figure 6, il est encore prévu en liaison au circuit de climatisation et au générateur électrochimique 1, au moins un moteur électrique 5, par exemple un moteur de traction du véhicule, et au moins un circuit électronique 7, par exemple pour le pilotage du ou des moteurs électriques prévus. Le circuit électronique 7 ou électronique concerne aussi bien l'électronique de pilotage du ou des moteurs 5, que les moyens de commande des vannes, le contrôle du ou des capteurs de température, un moyen de conversion DC-DC, le contrôle de charge de la batterie, en liaison à un circuit de freinage ou d'autres composants.

Le ou les moteurs électriques 5 et au moins le circuit électronique 7 sont utilisés aussi pour la récupération d'énergie thermique de chauffage ou de refroidissement comme le générateur électrochimique 1. Le ou les moteurs électriques 5 et au moins le circuit électronique 7 sont agencés dans un montage en parallèle avec le générateur électrochimique 1 en liaison au premier circuit de chauffage ou au second circuit de refroidissement comme expliqué ci-après. C'est une configuration idéale, car il est possible de mesurer la température de chaque élément séparément, ce qui permet une adaptation bien différenciée pour une opération de chauffage ou de refroidissement par récupération d'énergie thermique du ou des moteurs 5, du circuit électronique 7 ou du générateur électrochimique 1.

Un circuit de freinage 9 peut être encore prévu et monté en parallèle avec le ou les moteurs électriques 5, le circuit électronique ou électronique générale 7 et le générateur électrochimique 1. Ce circuit de freinage 9 comprend essentiellement une résistance traversée par un courant électrique suite au déclenchement d'un freinage du véhicule par freins à disques ou par freinage par moteur électrique 5. La résistance, reliée par fils électriques représentés symboliquement sur la figure 6, s'échauffe lors du freinage et chauffe le gaz ou le liquide entourant la résistance. Ce gaz ou ce liquide est transmis dans les conduites du premier circuit de chauffage ou du second circuit de refroidissement en passant par la batterie 1 et au niveau du ou des moteurs électriques 5 et de toute l'électronique 7. De l'énergie thermique est essentiellement fournie et permet d'être transmise dans l'un des circuits de chauffage ou de refroidissement pour apporter de l'énergie positive de chauffage à l'habitacle. Cette énergie thermique peut aussi servir à chauffer le générateur électrochimique 1.

Lorsqu'il y a une grande vitesse du véhicule électrique, le freinage d'urgence avec le ou les moteurs électriques 5 ne permet pas d'effectuer une charge directement du générateur électrochimique 1, car il y a de trop forts courants de passage dans le moteur. Comme représenté schématiquement sur la figure 9, il est possible tout d'abord de passer l'énergie dans la résistance électrique 9 en passant par l'électronique 7. Deux fils électriques de puissance électrique sont reliés en sortie du ou des moteurs 5 et en entrée de l'électronique 7, qui relie en sortie par deux fils électriques, les deux fils de la résistance du circuit de freinage 9. Une récupération d'énergie thermique est effectuée en sortie du circuit de freinage 9 en liaison au système HVAC et du premier circuit de chauffage ou du second circuit de refroidissement. Lorsque la puissance diminue dans le ou les moteurs 5 à ce moment-là on peut débuter la charge du générateur électrochimique 1 avec la puissance électrique en sortie du ou des moteurs électriques 5 en passant par l'électronique 7. Ainsi, on peut imaginer un véhicule sans freins hydrauliques, ce qui nous permet de récupérer 100 % d'énergie de freinage soit thermique, soit électrique pour charger le générateur électrochimique 1. L'énergie électrique ou thermique n'est donc pas perdue et constitue une énergie positive de charge ou de chauffage du générateur électrochimique 1.

Il peut être imaginé quatre moteurs électriques 5, c'est-à-dire un moteur dans chaque roue du véhicule, et en effectuant un freinage très sécurisé et indépendant pour chaque roue. Un circuit de freinage 9 peut être monté sur chaque roue du véhicule avec chaque moteur électrique 5.

Il est à noter que la circulation du fluide, tel que du fluide gazeux dans les conduites dans les figures 6 à 8 n'est illustrée que pour le second circuit de refroidissement comme pour la figure 5. La circulation du fluide est représentée par des traits plus foncés. Cependant, les parties du premier circuit de chauffage ou de récupération d'énergie thermique de chauffage sont également décrites ci-après.

Le premier circuit de chauffage ou de récupération d'énergie thermique de chauffage du générateur électrochimique 1 et d'au moins le moteur électrique 5 et du circuit électronique 7, voire du circuit de freinage 9 comprend une première conduite d'amenée du fluide 22. Cette première conduite d'amenée du fluide 22 amène le fluide à un élément caloporteur associé au générateur électrochimique 1 et à des portions de conduite d'au moins le moteur 5 et d'au moins le circuit électronique 7, voire du circuit de freinage 9. Le premier circuit de chauffage ou de récupération d'énergie thermique de chauffage comprend encore une première conduite d'évacuation du fluide 26 de l'élément caloporteur et des portions de conduite d'au moins le moteur 5 et du circuit électronique 7. La première conduite d'évacuation du fluide 26 est reliée à une première entrée d'une vanne retour à 3 voies 28 entre le condenseur interne 6 et le premier orifice de détente 8.

La première conduite d'amenée 22 est reliée à une première sortie d'une première vanne à 3 voies 24 prévue entre le compresseur 4 et le condenseur interne 6, et à une première entrée d'une seconde vanne à 4 voies 36. Le fluide est transmis depuis une première sortie de la seconde vanne 36 à l'élément caloporteur associé au générateur électrochimique 1, et depuis une seconde sortie de la seconde vanne 36 à une entrée d'une première vanne à 4 voies complémentaire 37. Une première sortie de cette première vanne complémentaire 37 est reliée aux portions de conduite d'au moins le moteur électrique 5, alors que la seconde sortie de la première vanne complémentaire 37 est reliée aux portions de conduite d'au moins le circuit électronique 7 et la troisième sortie de la première vanne complémentaire 37 est reliée au circuit de freinage 9 mis en parallèle avec le générateur électrochimique 1, le ou les moteurs électriques 5 et le circuit électronique 7. Les sorties d'au moins le moteur électrique 5, d'au moins le circuit électronique 7 et du circuit de freinage 9 sont reliées à des entrées d'une seconde vanne à 4 voies complémentaire 39, dont la sortie est reliée à une entrée d'une vanne de liaison 41, dont l'autre entrée est reliée à l'élément caloporteur du générateur électrochimique 1. La sortie de cette vanne de liaison 41 est reliée à une première entrée d'une troisième vanne à 3 voies 38 dont une première sortie de la troisième vanne 38 rejoint le circuit de climatisation via les vannes 28 et 21 et regagne le condenseur/évaporateur externe 2 en passant par le premier orifice de détente 8.

Comme représenté à la figure 6, le second circuit de refroidissement ou de récupération d'énergie thermique de refroidissement du générateur électrochimique 1 et d'au moins le moteur électrique 5 et d'au moins le circuit électronique 7 et du circuit de freinage 9 comprend une seconde conduite d'amenée du fluide 30. Cette seconde conduite d'amenée du fluide 30 amène le fluide à un élément caloporteur associé au générateur électrochimique 1 et à des portions de conduite d'au moins le moteur 5 et d'au moins le circuit électronique 7 et du circuit de freinage 9. Le second circuit de refroidissement ou de récupération d'énergie thermique de refroidissement comprend une seconde conduite d'évacuation du fluide 34 de l'élément caloporteur associé au générateur électrochimique 1 et à des portions de conduite d'au moins le moteur 5 et d'au moins le circuit électronique 7 et du circuit de freinage 9.

Selon le second circuit de refroidissement ou de récupération d'énergie thermique de refroidissement, le fluide, qui traverse le condenseur/évaporateur externe 2, circule vers l'accumulateur 3 via les vannes 18 et 20 contrôlées par les moyens de commande, puis dans le compresseur 4, où il est comprimé, et donc chauffé, puis envoyé, vers la vanne 24. Le fluide circule également en direction du second orifice de détente 12 par la vanne 18. La seconde conduite d'amenée du fluide 30 est reliée à une seconde sortie d'une quatrième vanne à 3 voies 32 prévue entre le second orifice de détente 12 et l'évaporateur interne 14, et à une seconde entrée de la seconde vanne à 4 voies 36 alors que la seconde conduite d'évacuation du fluide 34 de l'élément caloporteur passe par une seconde sortie de la troisième vanne 38 et est reliée à une seconde entrée de la cinquième vanne 20 à 4 voies prévue en aval de l'évaporateur interne 14, entre l'évaporateur interne 14 et le compresseur 4. L'énergie A par le condenseur/évaporateur externe 2 est ajoutée dans le compresseur 4 à l'énergie provenant de l'ensemble composé par le générateur électrochimique 1 et au moins le moteur électrique 5 et au moins le circuit électronique 7 et le circuit de freinage 9. Un fluide chaud entre dans le condenseur interne 6 par la vanne 24 et ressort plus froid du condenseur interne 6 pour traverser le premier orifice de détente 8 via la vanne 21 et regagner le condenseur/évaporateur externe 2.

Comme déjà précisé ci-dessus, plusieurs vannes 18, 20, 21, 24, 28, 32, 36, 37, 38, 39 et 41 sont agencées pour pouvoir mettre en communication le circuit de climatisation avec l'un ou l'autre du premier circuit de chauffage et du second circuit de refroidissement du générateur électrochimique 1 et d'au moins un moteur électrique 5 et d'au moins un circuit électronique 7 et le circuit de freinage 9. De plus, il est prévu des moyens de commande desdites vannes 18, 20, 21, 24, 28, 32, 36, 37, 38, 39 et 41 agencés pour autoriser la circulation du fluide du circuit de climatisation dans le premier circuit de chauffage ou dans le second circuit de refroidissement.

En fonction de la température mesurée par au moins un capteur de température, qui est associé aux moyens de commande du générateur électrochimique 1 et d'au moins le moteur électrique 5 et d'au moins le circuit électronique 7 ensemble ou séparément voire du circuit de freinage 9, la circulation du fluide peut aller dans le premier circuit de chauffage pour chauffer le générateur électrochimique 1 et le moteur électrique 5 et le circuit électronique 7 et le circuit de freinage 9, ou pour récupérer de l'énergie thermique de chauffage du générateur électrochimique 1, du moteur électrique 5 et du circuit électronique 7 et éventuellement du circuit de freinage 9. La circulation du fluide peut aussi aller dans le second circuit de refroidissement pour refroidir le générateur électrochimique 1 et le moteur électrique 5 et le circuit électronique 7, voire le circuit de freinage 9, ou pour récupérer de l'énergie thermique de refroidissement du générateur électrochimique 1, du moteur électrique 5 et du circuit électronique 7, voire du circuit de freinage 9. Ceci dans un premier temps sert à réguler la température du générateur électrochimique 1 et/ou du moteur électrique 5 et/ou du circuit électronique 7, mais peut aussi servir à utiliser le chaud ou le froid provenant du générateur électrochimique 1, du moteur électrique 5 et du circuit électronique 7 notamment pour chauffer ou refroidir l'habitacle du véhicule.

Comme précédemment indiqué en référence aux figures 1 à 5, le circuit de climatisation peut comprendre encore dans une première boucle et une dérivation 10 prévue entre le condenseur interne 6 et le condenseur/évaporateur externe 2, au niveau du premier orifice de détente 8. Au niveau de l'évaporateur interne 14, il peut être prévu un ventilateur 16 du bloc de climatisation. La circulation dans la première boucle ou dans la deuxième boucle et la dérivation est gérée au moyen des vannes 18 et 20, qui sont prévues à l'intersection de la première boucle et de la deuxième boucle, et la vanne 21 prévue à l'intersection de la première boucle et de la dérivation 10, en amont du premier orifice de détente 8. Ces vannes sont par exemple des électrovannes à au moins 3 voies, voire à au moins 4 voies.

La figure 7 représente une seconde forme d'exécution du dispositif de récupération et de régulation d'énergie thermique du véhicule à générateur électrochimique 1, qui comprend un circuit de climatisation d'un système HVAC de l'habitacle du véhicule. Comme précédemment, il est présenté selon cette seconde forme d'exécution vue à la figure 7 un mode de chauffage habitacle et de refroidissement du générateur électrochimique 1, avec au moins un moteur électrique 5 et au moins un circuit électronique 7. Il peut encore être envisagé d'avoir un circuit de freinage 9. Comme cette figure 7 comprend une grande partie des composants identiques et d'un fonctionnement équivalent à ceux de la figure 6, il ne sera décrit que les différences par rapport à la première forme d'exécution.

Au moins un moteur électrique 5 et au moins un circuit électronique 7 sont agencés dans un montage en série avec le générateur électrochimique 1 et en liaison au premier circuit de chauffage ou au second circuit de refroidissement. Un circuit de freinage 9 peut encore être monté en série avec le générateur électrochimique 1, le ou les moteurs électriques 5 et le circuit électronique 7. Dans cette configuration, la mesure de température de chaque élément, à savoir le générateur électrochimique 1, le moteur électrique 5 de traction, le circuit électronique 7 de pilotage et le circuit de freinage 9, est effectué par un capteur de température pour fournir une température commune et afin de permettre de récupérer du chaud ou du froid de chacun des éléments à utiliser pour chauffer ou refroidir l'habitacle du véhicule, voire pour charger le générateur électrochimique 1 comme expliqué précédemment.

La liaison au premier circuit de chauffage ou au second circuit de refroidissement n'est effectué que par la seconde vanne à 3 voies 36 et par la troisième vanne à 3 voies 38 comme le générateur électrochimique 1, le moteur électrique 5 de traction, le circuit électronique 7 de pilotage et le circuit de freinage 9 sont reliés en série.

La figure 8 représente une troisième forme d'exécution du dispositif de récupération et de régulation d'énergie thermique du véhicule à générateur électrochimique 1, qui comprend un circuit de climatisation d'un système HVAC de l'habitacle du véhicule. Comme précédemment, il est présenté selon cette troisième forme d'exécution vue à la figure 8 un mode de chauffage habitacle et de refroidissement du générateur électrochimique 1, avec au moins un moteur électrique 5 et au moins un circuit électronique 7 et un circuit de freinage 9. Comme cette figure 8 comprend une grande partie des composants identiques et d'un fonctionnement équivalent à ceux de la figure 6, il ne sera décrit que les différences par rapport à la première forme d'exécution.

Au moins un moteur électrique 5, au moins un circuit électronique 7 et par exemple un circuit de freinage 9 sont agencés dans un montage en série avec le générateur électrochimique 1 et sont reliés par des conduites dans lesquelles circule de l'eau comme fluide ou un autre liquide (glycole). Pour ce faire, il est prévu une pompe 13 de circulation du liquide et un échangeur 11 recevant le liquide à l'entrée de l'ensemble, qui comprend le générateur électrochimique 1, le moteur électrique 5, le circuit électronique 7 et le circuit de freinage 9. Une liaison est effectuée soit au premier circuit de chauffage ou au second circuit de refroidissement à l'entrée extérieure de l'échangeur, qui reçoit le fluide gazeux. Avantageusement, il est utilisé un échangeur 11 gaz-liquide et non un échangeur gaz-air.

Comme précédemment, la mesure de température de chaque élément, à savoir le générateur électrochimique 1, le moteur électrique 5 de traction, le circuit électronique 7 de pilotage et le circuit de freinage 9, est effectuée par un seul capteur de température pour fournir une température commune et afin de permettre de récupérer du chaud ou du froid de chacun des éléments à utiliser pour chauffer ou refroidir l'habitacle du véhicule, voire pour charger le générateur électrochimique 1 comme précédemment expliqué.

Bien entendu il peut être envisagé d'autres éléments du véhicule électrique, disposés dans le circuit fermé du circuit de climatisation pour notamment la récupération d'énergie thermique. On peut citer notamment la liaison avec un circuit de freinage du véhicule où il peut être employé une résistance susceptible de chauffer lors du freinage. Cette résistance peut être disposée en liaison avec le premier circuit de chauffage ou le second circuit de refroidissement. Et dans ces conditions de la chaleur peut être prélevée ou récupérée pour être transmise dans le véhicule pour chauffer l'habitacle. Le circuit lié au circuit de freinage peut être en liaison directe par la résistance avec le premier circuit de chauffage ou le second circuit de refroidissement. Ainsi tout élément susceptible de chauffer ou refroidir le véhicule électrique peut être utilisé en liaison au circuit de climatisation pour récupérer de la chaleur ou du froid à transmettre notamment dans l'habitacle du véhicule.

Bien entendu, la présente invention ne se limite pas aux exemples illustrés.

## Revendications

1. Dispositif de récupération et de régulation d'énergie thermique d'un véhicule électrique à générateur électrochimique (1), ledit générateur électrochimique (1) étant choisi parmi le groupe comprenant les batteries et les piles à combustible ou hybrides, ledit dispositif de régulation comprenant un circuit de climatisation d'un système HVAC de l'habitacle du véhicule, dans lequel circule un fluide, ledit circuit de climatisation comprenant au moins un condenseur/évaporateur externe (2), un compresseur (4), un condenseur interne (6) destiné à chauffer l'habitacle, un premier orifice de détente (8) prévu en aval du condenseur interne (6) entre le condenseur interne (6) et le condenseur/évaporateur externe (2), un évaporateur interne (14) destiné à refroidir l'habitacle, un second orifice de détente (12) prévu en amont de l'évaporateur interne (14), entre le condenseur/évaporateur externe (2) et l'évaporateur interne (14),
ledit dispositif de récupération et de régulation d'énergie thermique comprenant un premier circuit de chauffage ou récupération d'énergie thermique du générateur électrochimique (1) et un second circuit de refroidissement ou récupération d'énergie thermique du générateur électrochimique (1) dans lesquels circule ledit fluide, plusieurs vannes (18, 20, 21, 24, 28, 32, 36, 37, 38, 39, 41) étant agencées pour pouvoir mettre en communication le circuit de climatisation avec l'un ou l'autre du premier circuit de chauffage et du second circuit de refroidissement du générateur électrochimique (1), et des moyens de commande desdites vannes (18, 20, 21, 24, 28, 32, 36, 37, 38, 39, 41) agencés pour autoriser, en fonction de la température du générateur électrochimique (1), la circulation du fluide du circuit de climatisation dans le premier circuit de chauffage pour chauffer le générateur électrochimique (1) ou récupérer de l'énergie thermique de chauffage du générateur électrochimique (1) ainsi que la circulation du fluide du circuit de climatisation dans le second circuit de refroidissement pour refroidir le générateur électrochimique (1) ou récupérer de l'énergie thermique de refroidissement du générateur électrochimique (1), ledit premier circuit de chauffage du générateur électrochimique (1) comprenant une première conduite d'amenée du fluide (22) à un élément caloporteur associé au générateur électrochimique (1), ladite première conduite d'amenée (22) étant reliée à une première sortie prévue entre le compresseur (4) et le condenseur interne (6) par l'intermédiaire d'une première vanne (24) contrôlée par les moyens de commande et qui est reliée encore à une première entrée d'une seconde vanne (36) du circuit de chauffage du générateur électrochimique jusqu'à l'élément caloporteur du générateur électrochimique (1), et une première conduite d'évacuation du fluide (26) de l'élément caloporteur, qui est reliée à une première entrée prévue entre le condenseur interne (6) et le premier orifice de détente (8) par l'intermédiaire d'une troisième vanne (21) et par une quatrième vanne (28) liée à la troisième vanne (21) contrôlées par les moyens de commande, ledit second circuit de refroidissement du générateur électrochimique (1) comprenant une seconde conduite d'amenée du fluide (30) à un élément caloporteur associé au générateur électrochimique (1) via une seconde entrée de la seconde vanne (36), ladite seconde conduite d'amenée du fluide (30) étant reliée à une seconde sortie prévue entre le second orifice de détente (12) et l'évaporateur interne (14) par l'intermédiaire d'une cinquième vanne (32) contrôlée par les moyens de commande, et une seconde conduite d'évacuation du fluide (34) de l'élément caloporteur, qui est reliée à une seconde entrée prévue en aval de l'évaporateur interne (14) par l'intermédiaire d'une sixième vanne (20) contrôlée par les moyens de commande, entre l'évaporateur interne (14) et le compresseur (4), une septième vanne (18) étant prévue entre le condenseur/évaporateur externe (2) et la sixième vanne (20) et le second orifice de détente (12),
**caractérisé en ce que** le dispositif de récupération et de régulation d'énergie thermique comprend en outre au moins un moteur électrique (5), et au moins un circuit électronique (7) agencés dans un montage en parallèle avec le générateur électrochimique (1) en liaison au premier circuit de chauffage ou au second circuit de refroidissement pour être adaptés pour récupérer de l'énergie thermique de chauffage ou de refroidissement, **en ce qu'**une seconde sortie de la seconde vanne (36) est reliée à une entrée d'une huitième vanne (37), avec une première sortie de cette huitième vanne (37) reliée aux portions de conduite d'au moins le moteur électrique (5), alors qu'une seconde sortie de la huitième vanne (37) est reliée aux portions de conduite d'au moins le circuit électronique (7), et **en ce que** des sorties d'au moins le moteur électrique (5), et d'au moins le circuit électronique (7) sont reliées à des entrées d'une neuvième vanne (39), dont la sortie est reliée à une entrée d'une vanne de liaison (41), dont l'autre entrée est reliée à l'élément caloporteur du générateur électrochimique (1), et **en ce qu'**une sortie de cette vanne de liaison (41) est reliée à une première entrée d'une dixième vanne (38) dont une première sortie est la seconde conduite d'évacuation du fluide (34) de l'élément caloporteur, et dont une seconde sortie est la première conduite d'évacuation du fluide (26) de l'élément caloporteur.

2. Dispositif de récupération et de régulation d'énergie thermique selon la revendication 1, **caractérisé en ce qu'**il comprend un circuit de freinage (9) du véhicule avec une résistance susceptible de chauffer lors du freinage, ladite résistance étant disposée en liaison avec le premier circuit de chauffage ou le second circuit de refroidissement pour une récupération d'énergie thermique.

3. Dispositif de récupération et de régulation d'énergie thermique selon la revendication 1, **caractérisé en ce qu'**au moins le moteur électrique (5), au moins le circuit électronique (7) et un circuit de freinage (9) sont agencés dans un montage en parallèle avec le générateur électrochimique (1) en liaison au premier circuit de chauffage ou au second circuit de refroidissement, et en étant relié à une sortie de la huitième vanne (37) et relié à une entrée de la neuvième vanne (39).

4. Dispositif de récupération et de régulation d'énergie thermique selon l'une des revendication 2 et 3, **caractérisé en ce que** le circuit de freinage (9) comprend une résistance traversée par un courant électrique suite au déclenchement d'un freinage du véhicule, la résistance s'échauffant lors du freinage et chauffe un fluide gazeux ou liquide entourant la résistance pour fournir une énergie thermique de chauffage de l'habitacle ou du générateur électrochimique (1).

5. Dispositif de récupération et de régulation d'énergie thermique selon l'une des revendication 2 et 3, **caractérisé en ce qu'**il comprend quatre moteurs électriques (5) de traction, avec un moteur dans chaque roue du véhicule, permettant d'effectuer un freinage sécurisé et indépendant pour chaque roue tout en récupérant une énergie thermique plus précise du circuit de freinage.

6. Dispositif de récupération et de régulation d'énergie thermique selon la revendication 5, **caractérisé en ce qu'**un circuit de freinage (9) est monté sur chaque roue du véhicule avec chaque moteur électrique (5).

## Patentansprüche

1. System zur Rückgewinnung und Steuerung von thermischer Energie in einem Elektrofahrzeug mit einem elektrochemischen Generator (1), wobei der elektrochemische Generator (1) aus der Gruppe umfassend Batterien sowie Brennstoff- oder Hybridzellen ausgewählt ist, wobei das Steuersystem einen Klimatisierungskreislauf einer Klimaanlage im Fahrgastraum des Fahrzeugs umfasst, in dem ein Fluid zirkuliert, wobei der Klimatisierungskreislauf mindestens einen externen Kondensator/Verdampfer (2), einen Kompressor (4), einen internen Kondensator (6) zum Beheizen der Fahrgastzelle, ein erstes Expansionsventil (8), das stromabwärts des internen Kondensators (6) zwischen dem internen Kondensator (6) und dem externen Kondensator/Verdampfer (2) angeordnet ist, einen internen Verdampfer (14) zum Kühlen der Fahrgastzelle und ein zweites Expansionsventil (12), das stromaufwärts des internen Verdampfers (14) zwischen dem externen Kondensator/Verdampfer (2) und dem internen Verdampfer (14) angeordnet ist, umfasst.
wobei das System zur Rückgewinnung und Steuerung von thermischer Energie einen ersten Kreislauf zum Erwärmen oder Rückgewinnen von thermischer Energie aus dem elektrochemischen Generator (1) und einen zweiten Kreislauf zum Kühlen oder Rückgewinnen von thermischer Energie aus dem elektrochemischen Generator (1), in dem das Fluid zirkuliert, umfasst, wobei eine Vielzahl von Ventilen (18, 20, 21, 24, 28, 32, 36, 37, 38, 39, 41) so angeordnet ist, dass der Klimatisierungskreislauf mit dem ersten Heizkreislauf oder dem zweiten Kühlkreislauf am elektrochemischen Generator (1) verbindbar ist, und wobei Steuermittel zum Ansteuern der Ventile (18, 20, 21, 24, 28, 32, 36, 37, 38, 39, 41) so ausgelegt sind, dass sie es in Abhängigkeit von der Temperatur des elektrochemischen Generators (1) ermöglichen, das Fluid aus dem Klimatisierungskreislauf im ersten Heizkreislauf zirkulieren zu lassen, um den elektrochemischen Generator (1) zu erwärmen oder thermische Energie zum Erwärmen aus dem elektrochemischen Generator (1) zurückzugewinnen, sowie das Fluid aus dem Klimatisierungskreislauf im zweiten Kühlkreislauf zirkulieren zu lassen, um den elektrochemischen Generator (1) zu kühlen oder thermische Energie zur Kühlung aus dem elektrochemischen Generator (1) zurückzugewinnen, wobei der erste Heizkreislauf am elektrochemischen Generator (1) eine erste Leitung (22) zum Zuführen von Fluid zu einem mit dem elektrochemischen Generator (1) verbundenen Wärmeübertragungselement umfasst, wobei die erste Versorgungsleitung (22) mit einem ersten Auslass verbunden ist, der zwischen dem Kompressor (4) und dem internen Kondensator (6) vorgesehen ist, über ein erstes Ventil (24), das von den Steuermitteln angesteuert wird und ferner mit einem ersten Einlass eines zweiten Ventils (36) im Heizkreislauf am elektrochemischen Generator (1) bis zu dem Wärmeübertragungselement verbunden ist, und wobei eine erste Leitung (26) zum Ableiten von Fluid aus dem Wärmeübertragungselement mit einem ersten Einlass verbunden ist, der zwischen dem internen Kondensator (6) und dem ersten Expansionsventil (8) über ein drittes Ventil (21) und ein viertes Ventil (28), das mit dem dritten Ventil (21) verbunden ist und von den Steuermitteln angesteuert wird, vorgesehen ist, wobei der zweite Kühlkreislauf am elektrochemischen Generator (1) eine zweite Leitung (30) zum Zuführen von Fluid zu einem mit dem elektrochemischen Generator (1) verbundenen Wärmeübertragungselement über einen zweiten Einlass des zweiten Ventils (36) umfasst, wobei die zweite Fluidversorgungsleitung (30) mit einem zweiten Auslass verbunden ist, der zwischen dem zweiten Expansionsventil (12) und dem internen Verdampfer (14) über ein fünftes Ventil (32), das von den Steuermitteln angesteuert wird, vorgesehen ist, und wobei eine zweite Fluid-Drainageleitung (34) aus dem Wärmeübertragungselement mit einem zweiten Einlass verbunden ist, der stromabwärts des internen Verdampfers (14) zwischen dem internen Verdampfer (14) und dem Kompressor (4) über ein sechstes Ventil (20), das von den Steuermitteln angesteuert wird, vorgesehen ist, wobei ein siebtes Ventil (18) zwischen dem externen Kondensator/Verdampfer (2), dem sechsten Ventil (20) und dem zweiten Expansionsventil (12) vorgesehen ist.
**dadurch gekennzeichnet, dass** das System zur Rückgewinnung und Steuerung von thermischer Energie ferner mindestens einen Elektromotor (5) und mindestens eine elektronische Schaltung (7) umfasst, die in einer parallelen Anordnung mit dem elektrochemischen Generator (1) montiert und mit dem ersten Heizkreislauf oder dem zweiten Kühlkreislauf verbunden ist, um thermische Energie zum Heizen oder Kühlen zurückgewinnen zu können, **dadurch gekennzeichnet, dass** ein zweiter Auslass des zweiten Ventils (36) mit einem Einlass eines achten Ventils (37) verbunden ist, wobei ein erster Auslass dieses achten Ventils (37) mit Abschnitten der Leitung an mindestens dem Elektromotor (5) verbunden ist, während ein zweiter Auslass des achten Ventils (37) mit Abschnitten der Leitung an mindestens der elektronischen Schaltung (7) verbunden ist, und **dadurch gekennzeichnet, dass** Auslässe mindestens des Elektromotors (5) und mindestens der elektronischen Schaltung (7) mit Eingängen eines neunten Ventils (39) verbunden sind, dessen Auslass mit einem Einlass eines Verbindungsventils (41) verbunden ist, dessen weiterer Einlass mit dem Wärmeübertragungselement am elektrochemischen Generator (1) verbunden ist, und **dadurch gekennzeichnet, dass** ein Auslass dieses Verbindungsventils (41) mit einem ersten Einlass eines zehnten Ventils (38) verbunden ist, wobei ein erster Auslass dieses zehnten Ventils (38) die zweite Fluid-Drainageleitung (34) am Wärmeübertragungselement ist und ein zweiter Auslass die erste Fluid-Drainageleitung (26) am Wärmeübertragungselement ist.

2. System zur Rückgewinnung und Steuerung von thermischer Energie nach Anspruch 1, **dadurch gekennzeichnet, dass** es einen Bremskreis (9) am Fahrzeug umfasst, mit einem Widerstand, der sich während des Bremsvorgangs erwärmen kann, wobei der Widerstand mit dem ersten Heizkreislauf oder dem zweiten Kühlkreislauf zur Rückgewinnung von thermischer Energie verbunden ist.

3. System zur Rückgewinnung und Steuerung von thermischer Energie nach Anspruch 1, **dadurch gekennzeichnet, dass** zumindest der Elektromotor (5), zumindest die elektronische Schaltung (7) und ein Bremskreis (9) in einer parallelen Anordnung mit dem elektrochemischen Generator (1) montiert und mit dem ersten Heizkreislauf oder dem zweiten Kühlkreislauf verbunden sind sowie mit einem Auslass des achten Ventils (37) und mit einem Einlass des neunten Ventils (39) verbunden sind.

4. System zur Rückgewinnung und Steuerung von thermischer Energie nach einem der Ansprüche 2 oder 3, **dadurch gekennzeichnet, dass** der Bremskreis (9) einen Widerstand umfasst, durch den ein elektrischer Strom fließt, wenn die Bremsen am Fahrzeug betätigt werden, wobei sich der Widerstand während des Bremsvorgangs erwärmt und dabei Wärme an ein den Widerstand umgebendes gasförmiges oder flüssiges Fluid abgibt, um thermische Energie zum Erwärmen des Fahrgastraums oder des elektrochemischen Generators (1) bereitzustellen.

5. System zur Rückgewinnung und Steuerung von thermischer Energie nach einem der Ansprüche 2 oder 3, **dadurch gekennzeichnet, dass** es vier elektrische Antriebsmotoren (5) umfasst, wobei jeweils ein Motor in jedem Rad des Fahrzeugs angeordnet ist, wodurch ein sicheres und unabhängiges Bremsen jedes Rades ermöglicht wird und gleichzeitig eine gezieltere Rückgewinnung thermischer Energie aus dem Bremskreis erfolgt.

6. System zur Rückgewinnung und Steuerung von thermischer Energie nach Anspruch 5, **dadurch gekennzeichnet, dass** an jedem Rad des Fahrzeugs zusammen mit jeweils einem Elektromotor (5) ein Bremskreis (9) montiert ist.

## Claims

1. A system for recovering and controlling thermal energy in an electric vehicle with an electrochemical generator (1), said electrochemical generator (1) being chosen among the group comprising batteries and fuel or hybrid cells, said control system comprising an air-conditioning circuit of an HVAC system in the passenger compartment of the vehicle, in which a fluid circulates, said air-conditioning circuit comprising at least one external condenser/evaporator (2), a compressor (4), an internal condenser (6) for heating the passenger compartment, a first expansion valve (8) provided downstream of the internal condenser (6) between the internal condenser (6) and the external condenser/evaporator (2), an internal evaporator (14) for cooling the passenger compartment, a second expansion valve (12) provided upstream of the internal evaporator (14), between the external condenser/evaporator (2) and the internal evaporator (14),
said thermal energy recovery and control system comprising a first circuit for heating or recovering thermal energy from the electrochemical generator (1) and a second circuit for cooling or recovering thermal energy from the electrochemical generator (1) in which said fluid circulates, a plurality of valves (18, 20, 21, 24, 28, 32, 36, 37, 38, 39, 41) arranged so as to be able to switch the air conditioning circuit into communication with one or the other of the first heating circuit and of the second cooling circuit on the electrochemical generator (1), and means of controlling said valves (18, 20, 21, 24, 28, 32, 36, 37, 38, 39, 41) arranged to allow, according to the temperature of the electrochemical generator (1), the fluid from the air conditioning circuit to circulate in the first heating circuit to heat the electrochemical generator (1) or recover thermal energy for heating from the electrochemical generator (1), as well as the fluid from the air conditioning circuit to circulate in the second cooling circuit to cool the electrochemical generator (1) or recover thermal energy for cooling from the electrochemical generator (1), said first heating circuit on the electrochemical generator (1) comprising a first line (22) for supplying fluid to a heat-transfer element associated with the electrochemical generator (1), said first supply line (22) being connected to a first outlet provided between the compressor (4) and the internal condenser (6), via a first valve (24) controlled by the control means and which is further connected to a first inlet of a second valve (36) in the heating circuit on the electrochemical generator up to the heat transfer element on the electrochemical generator (1), and a first line (26) for draining fluid from the heat transfer element, which is connected to a first inlet provided between the internal condenser (6) and the first expansion valve (8) via a third valve (21) and via a fourth valve (28) connected to the third valve (21) controlled by the control means, said second cooling circuit on the electrochemical generator (1) comprising a second line (30) for supplying fluid to a heat transfer element associated with the electrochemical generator (1) via a second inlet of the second valve (36), said second fluid supply line (30) being connected to a second outlet provided between the second expansion valve (12) and the internal evaporator (14) via a fifth valve (32) controlled by the control means, and a second fluid drainage line (34) from the heat transfer element, which is connected to a second inlet provided downstream of the internal evaporator (14) via a sixth valve (20) controlled by the control means, between the internal evaporator (14) and the compressor (4), a seventh valve (18) being provided between the external condenser/evaporator (2) and the sixth valve (20) and the second expansion valve (12),
**characterised in that** the thermal energy recovery and control system further comprises at least one electric motor (5), and at least one electronic circuit (7) mounted in a parallel arrangement with the electrochemical generator (1) in communication with the first heating circuit or with the second cooling circuit so as to be capable of recovering thermal energy for heating or for cooling, **in that** a second outlet of the second valve (36) is connected to an inlet of an eighth valve (37), with a first outlet of this eighth valve (37) connected to the portions of the line on at least the electric motor (5), while a second outlet of the eighth valve (37) is connected to the portions of the line on at least the electronic circuit (7), and **in that** outlets of at least the electric motor (5), and of at least the electronic circuit (7) are connected to inlets of a ninth valve (39), the outlet of which is connected to an inlet of a connecting valve (41), the other inlet of which is connected to the heat transfer element on the electrochemical generator (1), and **in that** an outlet of this connecting valve (41) is connected to a first inlet of a tenth valve (38), a first outlet of which is the second fluid drainage line (34) on the heat transfer element, and a second outlet of which is the first fluid drainage line (26) on the heat transfer element.

2. The thermal energy recovery and control system according to claim 1, **characterised in that** it comprises a brake circuit (9) on the vehicle with a resistor capable of heating up during braking, said resistor being connected to the first heating circuit or the second cooling circuit for thermal energy recovery.

3. The thermal energy recovery and control system according to claim 1, **characterised in that** at least the electric motor (5), at least the electronic circuit (7) and a brake circuit (9) are mounted in a parallel arrangement with the electrochemical generator (1) in communication with the first heating circuit or with the second cooling circuit and connected to an outlet of the eighth valve (37) and connected to an inlet of the ninth valve (39)

4. The thermal energy recovery and control system according to either of claims 2 and 3, **characterised in that** the brake circuit (9) comprises a resistor through which an electric current runs when the brakes on the vehicle are applied, the resistor heating up during the braking and heating a gaseous or liquid fluid surrounding the resistor in order to provide thermal energy for heating the passenger compartment or the electrochemical generator (1).

5. The thermal energy recovery and control system according to either of claims 2 and 3, **characterised in that** it comprises four electric traction motors (5), with a motor in each wheel of the vehicle, enabling safe and independent braking for each wheel while recovering a more precise thermal energy from the brake circuit.

6. The thermal energy recovery and control system according to claim 5, **characterised in that** a brake circuit (9) is mounted on each wheel of the vehicle with each electric motor (5).
